# EUROPEAN PATENT APPLICATION

(11) **EP 4 727 143 A1**
(43) Date of publication of application: **15.04.2026**
(21) Application number: 24818755.1
(22) Date of filing: 07.06.2024
(51) Int. Cl.: H04N 21/472

(54) **MUSIC VIDEO GENERATION METHOD AND APPARATUS, AND ELECTRONIC DEVICE AND STORAGE MEDIUM**

(30) Priority: 08.06.2023 CN 202310679262
(71) Applicant: Beijing Zitiao Network Technology Co., Ltd., Beijing 100190 (CN)
(72) Inventor: SONG, Yiming, Beijing 100028 (CN); ZHAO, Yilin, Beijing 100028 (CN); ZHENG, Zhipeng, Beijing 100028 (CN); XU, Shunyang, Beijing 100028 (CN); MAO, Kedun, Beijing 100028 (CN)
(74) Representative: Grünecker Patent- und Rechtsanwälte PartG mbB
(86) International application number: PCT/CN2024/097900
(87) International publication number: WO 2024/251224

(57) **Abstract**

Provided in the embodiments of the present disclosure are a music video generation method and apparatus, and an electronic device and a storage medium. The method comprises: in response to a music video generation operation in a music video editing interface, determining a target music material and a target music video template which correspond to the music video generation operation; and generating a target music video on the basis of the target music material and the target music video template, and then displaying the target music video. In the present embodiment, a music video template is provided for a user, such that when the user edits a music video, only a music material needs to be imported, the music video template is selected, and thus a corresponding music video can be generated, thereby simplifying an editing operation of the music video, and improving the generation efficiency of the music video.

## Description

This application claims priority to Chinese Patent Application No. 202310679262.4, filed June 8, 2023, which is incorporated herein by reference in its entirety as a part of this application.

### TECHNICAL FIELD

Embodiments of the present disclosure relate to a music video generation method, device, electronic apparatus and storage medium.

### BACKGROUND

At present, when music videos need to be produced, video producers usually need a high level of video editing and music editing foundation, which makes the production of music videos time-consuming and laborious, and often results in poor effect.

### SUMMARY

Embodiments of the present disclosure provide a music video generation method, a device, an electronic apparatus and a storage medium, to simplify the edit operation of a music video and improve the generation efficiency of the music video.

In a first aspect, an embodiment of the present disclosure provides a music video generation method, the method includes:
in response to a music video generation operation in a music video editing interface, determining a target music material and a target music video template corresponding to the music video generation operation; and
generating a target music video based on the target music material and the target music video template, and displaying the target music video.

In a second aspect, the embodiment of the present disclosure further provides a music video generation device, the device includes:
a music video generation response module, configured to determine a target music material and a target music video template corresponding to a music video generation operation in response to the music video generation operation in a music video editing interface; and
a target music video generation module, configured to generate a target music video based on the target music material and the target music video template, and display the target music video.

In a third aspect, the embodiment of the present disclosure further provides an electronic apparatus, the electronic apparatus includes:
one or more processors;
a storage device, storing one or more programs, wherein,
when the one or more programs are executed by the one or more processors, the one and more processor implement the music video generation method provided in any embodiment of the present disclosure.

In a fourth aspect, the embodiment of the present disclosure further provides a storage medium comprising computer-executable instructions, wherein the computer-executable instructions upon execution by a computer processor, cause the computer processor to implement the music video generation method according to any embodiment of the present disclosure.

### BRIEF DESCRIPTION OF DRAWINGS

Combining drawings and referring to specific implementation modes below, the above and other features, advantages, and aspects of each embodiment of the present disclosure may become more apparent. Throughout the drawings, the same or similar reference numbers represent the same or similar elements. It should be understood that the drawings are schematic, and members and elements may not be drawn to scale.
Fig. 1a is a schematic flowchart of a music video generation method provided by an embodiment of the present disclosure;
Fig. 1b is a schematic diagram of a music video editing interface provided by an embodiment of the present disclosure;
Fig. 2a is a schematic flowchart of yet another music video generation method provided by an embodiment of the present disclosure;
Fig. 2b is a schematic timing diagram of a music video generation method provided by an embodiment of the present disclosure;
Fig. 3 is a structural block diagram of a music video generation device provided by an embodiment of the present disclosure;
Fig. 4 is a schematic structural diagram of an electronic apparatus provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be implemented in various forms and should not be construed as being limited to the embodiments described here. On the contrary, these embodiments are provided for more thorough and complete understanding of the present disclosure. It should be understood that the drawings and embodiments of the present disclosure are only for exemplary purposes and are not intended to limit the protection scope of the present disclosure.

It should be understood that various steps recorded in method implementation modes of the present disclosure may be executed in different orders and/or executed in parallel. In addition, the method implementation modes may include additional steps and/or omit executing steps shown. The scope of the present disclosure is not limited in this aspect.

The term "including" and its variations used in the present disclosure are open-ended including, namely "including but not limited to". The term "based" is "based at least partially". The term "an embodiment" means "at least one embodiment"; the term "another embodiment" means "at least one additional embodiment"; and the term "some embodiments" means "at least some embodiments". The relevant definitions of other terms are provided in the following description.

It should be noted that the concepts such as "first" and "second" mentioned in the present disclosure are only used to distinguish different devices, modules, or units, and are not intended to limit the orders of functions executed by these devices, modules, or units or relationships of interdependence thereof.

It should be noted that the modifications of "a", "an" and "a plurality of" mentioned in the present disclosure are schematic rather than restrictive, and those skilled in the art should understand that unless otherwise explicitly stated in the context, it should be understood as "one or more".

Before introducing the present technical solution, the application scenario may be firstly and exemplarily illustrated. The technical solution of the present disclosure may be applied to any interface that needs to produce music videos. For example, it may be applied to a scene where a user creates music videos.

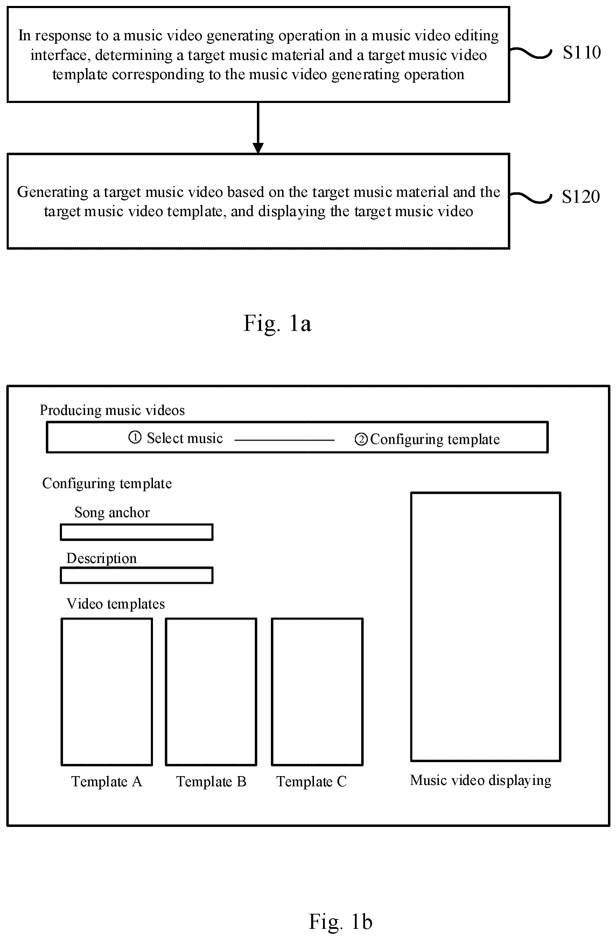

Fig. 1a is a schematic flowchart of a music video generation method provided by an embodiment of the present disclosure. The embodiment may be applicable to a situation for producing the music video in any music video generation scenario which is supported by the internet. The method may be executed by a music video generation device, which may be implemented in the form of software and/or hardware, and the hardware may be an electronic apparatus, such as a mobile terminal, a PC terminal or a server. The any music video generation scenario is usually implemented by the cooperation of the client and the server, and the method provided in the embodiment may be executed by the server, the client, or the cooperation of the client and the server.

As shown in Fig. 1a, the method in the embodiment includes:
S110. in response to a music video generation operation in a music video editing interface, determining a target music material and a target music video template corresponding to the music video generation operation.

Wherein, a device that executes the music video generation method provided by the embodiment of the present disclosure may be integrated into an application software which supports music video generation function, and the software may be installed into an electronic apparatus. Optionally, the electronic apparatus may be a mobile terminal or PC terminal, etc. The application software may be a type of software for video processing, and the specific application software will not be described in detail here, as long as the editing and processing of music videos can be realized. It may also be a specially developed application to implement the music video editing software, or it can be integrated in the corresponding page. Users can generate music videos through the integrated page on the PC terminal.

In order to solve the technical problem in related technologies which users need to perform corresponding processing operations on music and video and producing the music video is difficult when the users produce the music video, embodiments of the present disclosure provide a technical idea for generating a music video based on a music video template. Overall, various types and styles of music video templates are provided for users. When the users need to generate the music video, the music video may be automatically generated by directly selecting the music video template and importing a music material.

In one embodiment, after the user imports a music material and selects a music video template, the music video generation operation may be triggered, and the music video generation device determines the music material and a music video template associated with the music video generation operation based on the detected music video generation operation, and the music material associated with the music video operation is used as the target music material, and the music video template associated with the music video generation operation is used as the target music video template. Wherein, the music material may be any music-related material, such as songs, pure music, etc., and is not limited here.

In one implementation of the present invention, before in response to a music video generation operation in a music video editing interface, the method further includes:
Displaying the music video editing interface, wherein the music video editing interface comprises a material importing control, a music video template selection control, and a music video generation control;
Correspondingly, in response to a music video generation operation in a music video editing interface includes:
   In response to a trigger operation of the music video generation control.

Optionally, before the user initiates the music video generation operation, the music video editing interface is displayed based on the music video generation requirement triggered by the user. Exemplarily, the user may initiate a music video generation requirement by triggering a "new" control in the music video generation device. After detecting the music video generation requirement initiated by the user, the music video generation device displays the music video editing interface. It can be understood that the music video editing in the embodiments of the present disclosure requires the selection of a music material and a music template. Based on this, the music video editing interface may include a material importing control, a music video template selection control, and a music video generation control; wherein, the material importing control is used to import a music material, the music video template selection control is used to select a music video template, and the music video generation control is used to trigger the music video generation operation. Correspondingly, when a music video is generated, the user may click the material importing control in the music video editing interface, select the material and import the material; click the music video template selection control in the music video editing interface to select the music video template provided for the user, then click the music video generation control to initiate the music video generation operation. After the music video generation device detects the music video generation operation, the music video generation device determines the music material imported by the user as the target music material, and determines the music video template selected by the user as the target music video template. Wherein, the music video editing interface may be an interface on the web page terminal or an interface on the application mobile terminal, which is not limited here. In other words, the user may produce a music video on the web page or on the mobile terminal.

In the step, the front end of the music video editing device responds to the music video generation in the music video editing interface, that is, the user imports the music and selects a music video template in the front end.

S120. generating a target music video based on the target music material and the target music video template, and displaying the target music video.

After determining the target music material and the target music video template, the target music video is generated based on the target music material and the target music video template, and the target music video is displayed in the music video editing interface.

It can be understood that the music video template is a fixed mode of music video, but there is a replaceable part in the fixed mode, that is, a fillable template element. Considering that the audio and lyric of music videos of different music are different, the fillable template elements of the music video template may be set to a lyric element and an audio element. Based on this, generating the target music video based on the target music material and the target music video template may be: filling the target music video into the fillable template element of the target music video template, to render and obtain the target music video. Specifically, the lyric of the target music material may be filled in the lyric region of the target music video template, and the audio of the target music material may be filled in the audio region of the target music video template to obtain a draft file of the target music video, and the draft file of the target music video may be rendered to obtain the target music video.

Optionally, the rendering of the target music video may refer to rendering manners in related technologies, which will not be described again here. For example, the cloud edit component may be called to implement the rendering of the target music video.

In one implementation of the present disclosure, the music video editing interface is a browser page, and the browser page further includes a video displaying interface, and the displaying the target music video includes: displaying the target music video in the video displaying interface. Optionally, a manner of editing the music video on the web page may be provided, the user may import the music and select the video template in the music video rendering interface of the browser page. After the browser generates the target music video based on the music imported by the user and the video template selected by the user, the target music video is displayed on the video displaying page of the browser page. The music video is edited on the browser page and the browser page synchronously displays the music video effect of the mobile terminal, which can make the editing of the music video more clearer and faster.

Fig. 1b is a schematic diagram of a music video editing interface provided by an embodiment of the present disclosure. Fig. 1b schematically shows an interface schematic view in which the music video producing is performed in the browser page. Fig. 1b shows a browser page, which includes a music video editing guide interface, a music video editing interface and a video displaying interface. Specifically, the music video editing guide interface is the music video producing part which is used to guide a user to perform the production of the music video, the music video editing interface is a configuring template part, and the video displaying interface is the music video displaying part. The user may configure the music video in the configuring template, which includes the selection of a song and the selection of a video template. The user may import a video in a component corresponding to the song anchor and select a video template in a component corresponding to the video template. After the user imports the video and selects the template, after detecting the music video generation operation, the browser generates the corresponding target music video, and displays the target music video in the music video displaying component of the browser page.

In the embodiment, the target music video being generated based on the target music material and the target music video template may be the target music video being generated based on the complete target music material and a part of the target music material.

In one implementation of the present disclosure, generating a target music video based on the target music material and the target music video template includes:
determining a video generation segment corresponding to the target music material and a segment lyric corresponding to the video generation segment;
generating a target music video based on the video generation segment, the segment lyric, and the target music video template.

Based on the generation requirement of the music video, the video generation segment corresponding to the target music material may be determined, and the target music video may be generated based on the video generation segment. Wherein, the video generation segment may be the complete target music material or a partial segment of the target music material. According to the above embodiments, when the target music material is a song, the audio part and the lyric part of the target music material are required to generate the target music video. If the target music video is generated based on the video generation segment, in order to ensure the synchronization of the lyric and audio, it is necessary to extract the segment lyric corresponding to the video generation segment, and then generate the target music video based on the video generation segment, the segment lyric and the target music video template. Optionally, the video generation segment may be filled in the audio region of the target music video template, and the segment lyric may be filled in the lyric region of the target music video template to generate a target music video in which audio and lyric are synchronized.

Wherein, after the video generation segment is determined, the lyric of the video generation segment is extracted as the segment lyric, or the material lyric of the target music material may be directly extracted, and the lyric corresponding to the video generation segment may be extracted from the material lyric as the segment lyric.

In one embodiment of the present disclosure, determining the segment lyric corresponding to the video generation segment includes:
extracting a lyric time information in the target music material, wherein the lyric time information includes a lyric information and a timeline corresponding to the lyric information;
determining the segment lyric based on the video generation segment and the lyric time information.

Optionally, the material lyric of the target music material may be firstly extracted as the lyric time information, and the lyric corresponding to the video generation segment is extracted from the material lyric as the segment lyric. The lyric time information in the target music material may be firstly extracted, and then the segment lyric is determined from the lyric time information. The extracting of the video generation segment and the extracting of the lyric time information may be performed asynchronously, to speed up the processing speed. Wherein, the lyric time information may be extracted through the lyric extracting time-stamping manner in related technologies, which is no longer limited here.

Based on the above solution, determining the segment lyric based on the video generation segment and the lyric time information includes:
determining a music material time period of the video generation segment in the target music material;
taking a lyric information corresponding to the music material time period in the lyric time information as the segment lyric.

Optionally, the segment lyric may be extracted from the lyric time information based on the music material time period of the video generation segment in the target music material. For example, a start time of the target music material may be set to 0, the music material time period of the video generation segment in the target music material may be determined, and an accelerated music material time period is (a, b), and lyric corresponding to the time period (a, b) the lyric time information is used as the segment lyric.

In the generation scenario of the music video, the duration of the target music video may be limited due to limited processing ability or other situations. When the duration of the target music video is limited, the video generation segment corresponding to the target music material may be determined based on the material type of the target music material. Correspondingly, determining the video generation segment corresponding to the target music material includes:
according to the material type of the target music material, determining the corresponding video generation segment in the target music material, wherein the material type is an edit type or a non-edit type.

Considering that when the user imports the music material, they may edit the music material in advance, it can be understood that the edited music material and the music material which is not edited have the different duration, and the durations of the target music videos generated directly based on the edited music material and the music material which is not edited is also different. Then, when the duration of the target music video is limited, the video generation segment corresponding to the target music material may be determined based on the edit type or non-edit type of the target music material.

Optionally, the material type of the target music material may be determined based on the material attribute of the target music material. For example, when the user imports the material, the type of the imported material is selected, and the selected type is stored as the type of the imported material in the material attribute of the imported material. When the material type of the target music material needs to be determined, the material attribute of the target music material may be queried to determine the material type. Optionally, the material type of the target music material may also be determined based on the material duration of the target music material. When the music material imported by the user is a complete song, the song duration is generally longer, and the edited material is generally shorter, and based on this, the duration threshold may be preset, and the material type of the target music material may be determined based on the duration threshold. Specifically, when the material duration of the target music material is longer than the duration threshold, the material type of the target music material is determined to be a non-edit type, and when the material duration of the target music material is shorter than the duration threshold, the material type of the target music material is determined to be an edit type.

Based on the above solution, determining the corresponding video generation segment in the target music material according to the material type of the target music material includes:
When the material type of the target music material is an edit type, taking the target music material as the video generation segment;
When the material type of the target music material is a non-edit type, extracting a chorus segment of the target music material as the video generation segment.

When the material type of the target music material is the edit type, it means that the duration of the target music material is short and meets the video duration limitation of the target music video, and the target music material may be used as a video generation segment; When the material type of the target music material is a non-edit type, it means that the duration of the target music material is long and does not meet the video duration limitation of the target music video and chorus segment in the target music material may be extracted as the video generation segment.

Wherein, the extracting of the chorus segment of the target music material may refer to the relevant chorus segment extraction manner, and is not limited here.

In the step, generating the target music video based on the target music material and the target music video template may be performed by the front end or by a back end/a server, which is not limited here. Optionally, generating the target music video based on the target music material and the target music video template may be performed by the back-end/the server, which can improve the generation speed of the template music video.

In one implementation of the present disclosure, the music video generation operation is triggered by a front end, and the method further includes: generating a music video task identifier, and sending the music video task identifier to the front end, so that the front end generates a video preview request based on the video task identifier;

The displaying the target music video includes:
receiving the video preview request sent by polling of the front end, and after generating the target music video, send the target music video to the front end for displaying based on the video preview request.

Optionally, the triggering of the music video generation operation may be executed by the user in the front end. After the user triggers the music video generation operation in the front end, the front end sends the music video generation operation to the back end, and the back end generates a corresponding music video task identifier based on the received music video generation operation and returns it to the front end, and the front end generates a video preview request carrying the music video task identifier and sends it to the back end. Considering that the generation of the music video requires a certain time period to process, there may be a situation where the back end does not generate the target music video after the front end sends the video preview request, so the front end needs to poll to send the video preview request. After the back end generates the target music video, when the video preview request sent by the front end is received again, the generated target music video is sent to the front end and displayed by the front end. Wherein, the front end may be a browser page or a front end of a mobile terminal of the application, which is not limited here.

The technical solution of the embodiment of the present disclosure determines the target music material and the target music video template corresponding to the music video generation operation by responding to the music video generation operation in the music video editing interface; generating a target music video based on the target music material and the target music video template, and displaying the target music video. By providing the music video template for the user, when the user edits the music video, only importing of the music material and selecting of the music video template are needed, the corresponding music video can be generated, which simplifies the editing operation of the music video and improves the generation efficiency of the music video.

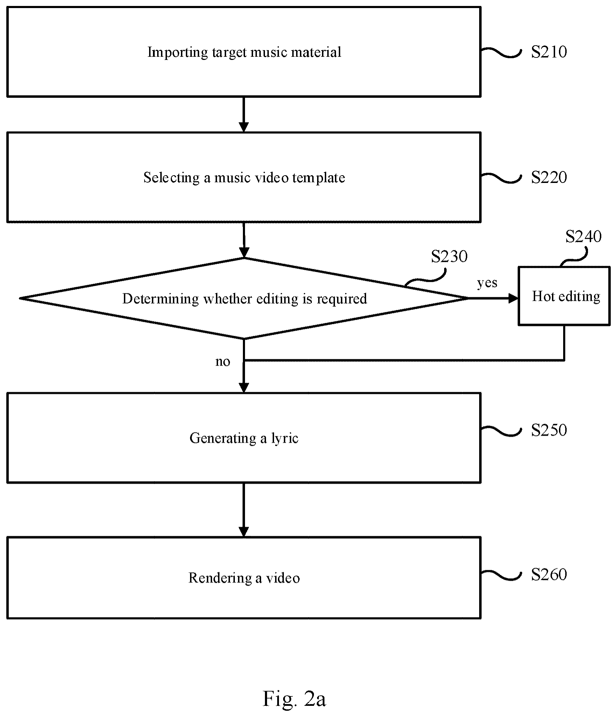

Fig. 2a is a schematic flowchart view of another music video generation method provided by an embodiment of the present disclosure. Fig. 2a provides an optional embodiment based on the above embodiment.

Overall, in the embodiment, by providing a series of fixed templates and selecting one of them, lyric recognition and the lyric subtitle time-stamping can be automatically realized, and a corresponding music video is generated. Using the method provided in the embodiment, there is no need to care about the redundant video production process, and music videos can be produced in batches quickly.

As shown in Fig. 2a, the music video generation method provided in Fig. 2a includes:
S210. importing the target music material.

A music creator user may import the music they created as target music material.

S220. selecting a music video template.

The user may select a template from the template list as the target music video template.

Wherein, S210 importing the target music material and S220 selecting the music video template may be executed by the front end, that is, interacting with the user, allowing the user to select music and music video template may be performed on the front end.

S230. determining whether editing is required.

If yes, executing S240; If no, executing S250 and then executing S260.

S240. hot editing.

Performing a chorus part editing on the target music material, and getting a hot segment as the video generation segment.

S250. generating a lyric.

After extracting a complete lyric, filtering to obtain the segment lyric corresponding to the video generation segment.

S260. rendering a video.

The target music video is obtained by rendering based on video generation segment, the segment lyric and the target music video template.

Wherein, some of the steps: S230 of determining whether editing is required, S240 of hot editing, S250 generating a lyric, and S260 of rendering a video may be executed by the front end or by the back end. In the embodiment of the present disclosure, execution by the back end can improve the generation speed of the template music video.

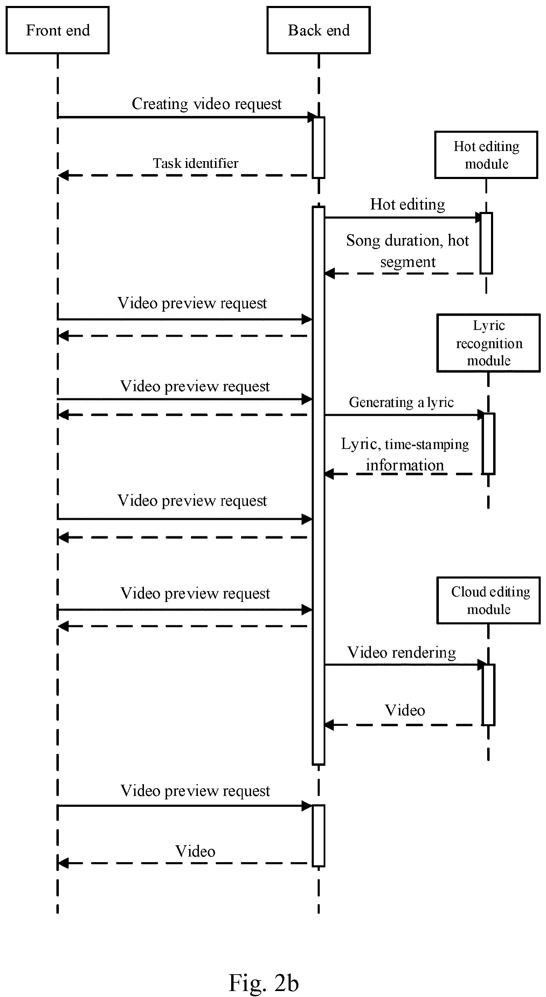

Fig. 2b is a schematic sequence diagram of a music video generation method provided by an embodiment of the present disclosure. As shown in Fig. 2b, the music video generation method provided by the embodiment of the present disclosure is implemented through the interaction between the front end and the back end. Wherein, the front end is mainly used to interact with the user and allow the user to select music and template. The back end mainly processes the music and the template selected by the user, performs hot editing, generates lyric and then generates the video. Specifically, firstly, the user initiates a creating video request on the front end, after receiving the creating video request, the back end generates a task identifier and returns it to the front end, and the front end generates a video preview request including the task identifier and polls and sends it to the back end. When the back end does not generate the video, the back end does not feedback information to the front end. The process generating the video by the back end mainly includes: performing the hot editing on the target music material by calling a hot editing module, obtaining a song duration and a hot segment of the target music material; recognizing the lyric of the target music material and performing time-stamping by calling the lyric recognition module; determining the target lyric based on the duration corresponding to the hot segment, and rendering the hot segment and the corresponding lyric based on the target video template by calling the cloud editing module, to obtain the video; after the back-end obtains the video and then again receives the video preview request initiated by the front end, sending the video to the front end and displaying by the front end.

The embodiment reduces the music video production threshold and improves the music video production efficiency by providing a music video template for the user, and selecting the music video template by the user to generate a music video.

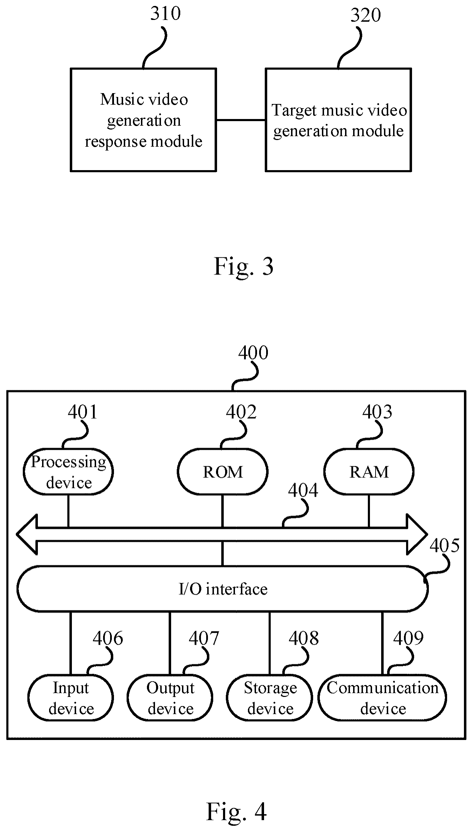

Fig. 3 is a structural block diagram of a music video generation device provided by an embodiment of the present disclosure, which can execute the music video generation method provided by any embodiment of the present disclosure, and has corresponding functional modules and beneficial effects of the execution method. As shown in Fig. 3, the device specifically includes: a music video generation response module 310 and a target music video generation module 320, wherein:

The music video generation response module 310 is configured to determine the target music material and target music video template corresponding to the music video generation operation in response to the music video generation operation in the music video editing interface;

The target music video generation module 320 is configured to generate a target music video based on the target music material and the target music video template, and display the target music video.

In the technical solution of the embodiment of the present disclosure, the music video generation response module 310 responds to the music video generation operation in the music video editing interface to determine the target music material and the target music video template corresponding to the music video generation operation; the target music video generation module 320 generates a target music video based on the target music material and the target music video template, and displays the target music video. By providing the user with the music video template, when the user edits the music video, only importing of the music material and selecting of the music video template are needed, the corresponding music video can be generated, which simplifies the editing operation of the music video and improves the generation efficiency of the music video.

Based on the above technical solutions, the target music video generation module 320 is specifically used for:
determining the video generation segment corresponding to the target music material and the segment lyric corresponding to the video generation segment;
generating a target music video based on the video generation segment, the segment lyric, and the target music video template.

Based on the above technical solutions, the target music video generation module 320 is specifically used for:
extracting lyric time information in the target music material, wherein the lyric time information includes a lyric information and a timeline corresponding to the lyric information;
determining the segment lyric based on the video generation segment and the lyric time information.

Based on the above technical solutions, the target music video generation module 320 is specifically used for:
determining a music material time period of the video generation segment in the target music material;
taking a lyric information corresponding to the music material time period in the lyric time information as the segment lyric.

Based on the above technical solutions, the target music video generation module 320 is specifically used for:
determining a corresponding video generation segment in the target music material according to a material type of the target music material, wherein the material type is an edit type or a non-edit type.

Based on the above technical solutions, the target music video generation module 320 is specifically used for:
when the material type of the target music material is the edit type, taking the target music material as the video generation segment; and
when the material type of the target music material is the non-edit type, extracting a chorus segment of the target music material as the video generation segment.

Based on each of the above technical solutions, the device also includes an editing interface displaying module which is used for:
displaying the music video editing interface, wherein the music video editing interface comprises a material importing control, a music video template selection control, and a music video generation control;
correspondingly, the music video generation response module 310 is specifically used for:
responding to a trigger operation of the music video generation control.

The music video generation device provided by the embodiments of the present disclosure can execute the music video generation method provided by any embodiment of the present disclosure, and has corresponding functional modules and beneficial effects of the execution method.

It is worth noting that each unit and module included in the above device are only divided according to functional logic, but are not limited to the above division, as long as the corresponding function can be achieved; In addition, the specific names of each functional unit are only for the convenience of distinguishing each other, and are not used to limit the protection scope of the embodiments of the present disclosure.

Fig. 4 is a schematic structural diagram of an electronic apparatus provided by an embodiment of the present disclosure. Referring next to Fig. 4, a schematic structural diagram of an electronic apparatus (such as the terminal apparatus or a server in Fig. 4) 400 suitable for implementing embodiments of the present disclosure is shown. The terminal apparatus in the embodiment of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (e.g., an in-vehicle navigation terminal) and the like, and a fixed terminal such as a digital TV, a desktop computer and the like. The electronic apparatus shown in Fig. 4 is only an example and should not impose any limitations on the functions and the usage scope of the embodiments of the present disclosure.

As shown in Fig. 4, the electronic apparatus 400 may include a processing device (e.g., a central processing unit, a graphics processing unit, etc.) 401 that may perform various appropriate actions and processes according to a program stored in a read-only memory (ROM) 402 or loaded into a random access memory (RAM) 403 from a memory 408. In the RAM 403, various programs and data required for the operation of the electronic apparatus 400 are also stored. The processing device 401, ROM 402, and RAM 403 are connected to each other via a bus 404. An edit/output (I/O) interface 405 is also connected to the bus 404.

In general, the following devices may be connected to the I/O interface 405, the devices includes a input device 406 such as a touch screen, a touchpad, a keyboard, a mouse, a camera, a microphone, an accelerometer, and a gyroscope; a output device 407 such as a liquid crystal display (LCD), a loudspeaker, and a vibrator; a storage device 408 such as a magnetic tape, and a hard disk; and a communication device 409. The communication device 409 may allow the electronic apparatus 400 to wireless-communicate or wire-communicate with other apparatus so as to exchange data. Although Fig. 4 shows the electronic apparatus 400 with various devices, it should be understood that it is not required to implement or possess all the devices shown. Alternatively, it may implement or possess the more or less devices.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication device 409, or installed from the storage device 408, or installed from ROM 402. When the computer program is executed by the processing device 401, the above functions limited in the method according to the embodiments of the present disclosure are executed.

The names of the messages or information exchanged between a plurality of the devices in the implementation modes of the present disclosure are only for descriptive purposes and are not intended to limit the scopes of these messages or information.

The electronic apparatus provided in the embodiment of the present disclosure belongs to the same inventive concept as the music video generation method provided in the above embodiments. Technical details that are not described in detail in the present embodiment may be referred to the above embodiments, and the present embodiment has the same beneficial effects as the above embodiments.

An embodiment of the present disclosure provides a computer storage medium in which a computer program is stored, and when the program is executed by a processor, the music video generation method provided in the above embodiments is implemented.

It should be noted that the above computer-readable medium in the present disclosure may be a computer-readable signal medium, a computer-readable storage medium, or any combinations of the two. The computer-readable storage medium may be but not limited to, for example, a system, a device or a member of electricity, magnetism, light, electromagnetism, infrared, or semiconductor, or any combinations of the above. More specific examples of the computer-readable storage medium may include but not limited to: an electric connector with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage member, a magnetic storage member or any suitable combinations of the above. In the present disclosure, the computer-readable storage medium may be any visible medium that contains or stores a program, and the program may be used by an instruction executive system, device or member, or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, device or member or in combination with it. The program code contained in the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above computer-readable medium may be contained in the above electronic apparatus; and it may also exist separately without being assembled into the electronic apparatus.

The above computer-readable medium carries one or more programs, and when the above one or more programs are executed by the electronic apparatus, the electronic apparatus:
in response to a music video generation operation in a music video editing interface, determining a target music material and a target music video template corresponding to the music video generation operation;
generating a target music video based on the target music material and the target music video template, and displaying the target music video.

The computer program code for executing the operation of the present disclosure may be written in one or more programming languages or combinations thereof, the above programming language includes but not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, which depends on the functions involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation on the unit itself in a certain situation. For example, the first obtaining unit may also be described as "a unit that obtains at least two internet protocol addresses".

The functions described above in the specification may be at least partially executed by one or more hardware logic components. For example, non-restrictive exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, device , or apparatus. The machine-readable medium may be a machine-readable signal medium or a machine-readable storage medium. The machine-readable medium may include but not limited to an electronic, magnetic, optical, electromagnetic, infrared, or semiconductor system, device, or apparatus, or any suitable combinations of the above. More specific examples of the machine-readable storage medium may include an electric connector based on one or more wires, a portable computer disk, a hard disk, RAM, ROM, an erasable programmable read-only memory (EPROM or flash memory), an optical fiber, CD-ROM, an optical storage device, a magnetic storage device, or any suitable combinations of the above.

According to one or more embodiments of the present disclosure, a first example provides a music video generation method, the method includes:
in response to a music video generation operation in a music video editing interface, determining a target music material and a target music video template corresponding to the music video generation operation; and
generating a target music video based on the target music material and the target music video template, and displaying the target music video.

According to one or more embodiments of the present disclosure, a second example provides a music video generation method, the method further includes:
the generating a target music video based on the target music material and the target music video template, and displaying the target music video includes:
determining a video generation segment corresponding to the target music material and a segment lyric corresponding to the video generation segment; and
generating the target music video based on the video generation segment, the segment lyric, and the target music video template.

According to one or more embodiments of the present disclosure, a third example provides a music video generation method, the method further includes:
determining a segment lyric corresponding to the video generation segment includes:
extracting a lyric time information in the target music material, wherein the lyric time information comprises a lyric information and a timeline corresponding to the lyric information; and
determining the segment lyric based on the video generation segment and the lyric time information.

According to one or more embodiments of the present disclosure, a fourth example provides a music video generation method, the method further includes:
determining the segment lyric based on the video generation segment and the lyric time information includes:
determining a music material time period of the video generation segment in the target music material; and
taking a lyric information corresponding to the music material time period in the lyric time information as the segment lyric.

According to one or more embodiments of the present disclosure, a fifth example provides a music video generation method, the method further includes:
determining a video generation segment corresponding to the target music material includes:
determining a corresponding video generation segment in the target music material according to a material type of the target music material, wherein the material type is an edit type or a non-edit type.

According to one or more embodiments of the present disclosure, a sixth example provides a music video generation method, the method further includes:
determining a corresponding video generation segment in the target music material according to a material type of the target music material includes:
when the material type of the target music material is the edit type, taking the target music material as the video generation segment; and
when the material type of the target music material is the non-edit type, extracting a chorus segment of the target music material as the video generation segment.

According to one or more embodiments of the present disclosure, a seventh example provides a music video generation method, the method further includes:
before in response to a music video generation operation in a music video editing interface, the method further includes:
displaying the music video editing interface, wherein the music video editing interface comprises a material importing control, a music video template selection control, and a music video generation control;
correspondingly, in response to a music video generation operation in a music video editing interface comprises:
   in response to a trigger operation of the music video generation control.

According to one or more embodiments of the present disclosure, an eighth example provides a music video generation device, the device includes:
a music video generation response module, configured to determine a target music material and a target music video template corresponding to a music video generation operation in response to the music video generation operation in a music video editing interface; and
a target music video generation module, configured to generate a target music video based on the target music material and the target music video template, and display the target music video.

The above description is only exemplary embodiments of the present disclosure and explanation of the technical principles applied. Those skilled in the art should understand that the disclosed scope involved in the present disclosure is not limited to the technical solutions formed by specific combinations of the above technical features, and should also cover other technical solutions formed by arbitrary combinations of the above technical features or equivalent features thereof without departing from the above disclosed concept. For example, a technical solution is formed by replacing the above features with (but not limited to) technical features with the similar functions disclosed in the present disclosure.

In addition, although the operations are depicted in a specific order, this should not be understood as requiring these operations to be executed in the specific order shown or in a sequential order. Under certain circumstances, multitasking and parallel processing may be advantageous. Similarly, although a plurality of specific implementation details are included in the above discussion, it should not be interpreted as limiting the scope of the present disclosure. Certain features described in the context of individual embodiments may also be combined and implemented in a single embodiment. On the contrary, various features described in the context of a single embodiment may also be implemented individually or in any suitable sub-combinations in the multiple embodiments.

Although the present subject is described already by using the language specific to structural features and/or method logic actions, it should be understood that the subject defined in the appended claims is not necessarily limited to the specific features or actions described above. On the contrary, the specific features and actions described above are merely exemplary forms of implementing the claims.

## Claims

1. A music video generation method, comprising:
in response to a music video generation operation in a music video editing interface, determining a target music material and a target music video template corresponding to the music video generation operation; and
generating a target music video based on the target music material and the target music video template, and displaying the target music video.

2. The method according to claim 1, wherein the generating a target music video based on the target music material and the target music video template, and displaying the target music video comprises:
determining a video generation segment corresponding to the target music material and a segment lyric corresponding to the video generation segment; and
generating the target music video based on the video generation segment, the segment lyric, and the target music video template.

3. The method according to claim 2, wherein the determining a segment lyric corresponding to the video generation segment comprises:
extracting a lyric time information in the target music material, wherein the lyric time information comprises a lyric information and a timeline corresponding to the lyric information; and
determining the segment lyric based on the video generation segment and the lyric time information.

4. The method according to claim 3, wherein the determining the segment lyric based on the video generation segment and the lyric time information comprises:
determining a music material time period of the video generation segment in the target music material; and
taking a lyric information corresponding to the music material time period in the lyric time information as the segment lyric.

5. The method according to any one of claims 2 to 4, wherein the determining a video generation segment corresponding to the target music material comprises:
determining a corresponding video generation segment in the target music material according to a material type of the target music material, wherein the material type is an edit type or a non-edit type.

6. The method according to claim 5, wherein the determining a corresponding video generation segment in the target music material according to a material type of the target music material comprises:
when the material type of the target music material is the edit type, taking the target music material as the video generation segment; and
when the material type of the target music material is the non-edit type, extracting a chorus segment of the target music material as the video generation segment.

7. The method according to any one of claims 1 to 6, wherein before the in response to a music video generation operation in a music video editing interface, the method further comprises:
displaying the music video editing interface, wherein the music video editing interface comprises a material importing control, a music video template selection control, and a music video generation control;
correspondingly, the in response to a music video generation operation in a music video editing interface comprises:
in response to a trigger operation of the music video generation control.

8. The method according to claim 1, wherein the music video editing interface is a browser page, and the browser page further comprises a video displaying interface, wherein the displaying the target music video comprises:
displaying the target music video on the video displaying interface.

9. The method according to any one of claims 1 to 8, wherein the music video generation operation is triggered by a front end, the method further comprises:
generating a music video task identifier and sending the music video task identifier to the front end, to cause the front end to generate a video preview request based on the music video task identifier; and
the displaying the target music video comprises:
receiving the video preview request sent by polling of the front end, and after generating the target music video, sending the target music video to the front end for displaying based on the video preview request.

10. A music video generation device, comprising:
a music video generation response module, configured to determine a target music material and a target music video template corresponding to a music video generation operation in response to the music video generation operation in a music video editing interface; and
a target music video generation module, configured to generate a target music video based on the target music material and the target music video template, and display the target music video.

11. An electronic apparatus, comprising:
one or more processors;
a storage device, storing one or more programs, wherein,
when the one or more programs are executed by the one or more processors, the one and more processors implement the music video generation method according to any one of claims 1 to 9.

12. A storage medium comprising computer-executable instructions, wherein the computer-executable instructions upon execution by a computer processor, cause the computer processor to implement the music video generation method according to any one of claims 1 to 9.
